# EUROPÄISCHE PATENTANMELDUNG

(11) **EP 2 450 155 A1**
(43) Veröffentlichungstag der Anmeldung: **09.05.2012**
(21) Anmeldenummer: 10189745.2
(22) Anmeldetag: 03.11.2010
(51) Int. Cl.: B25D 9/00, B25D 11/00, B25D 16/00, B25D 17/06, B23P 9/04, C21D 7/04

(54) **Nadler zur lokalen Oberflächenbearbeitung von Bauteilen**

(71) Anmelder: MTU Aero Engines GmbH, 80995 München (DE)
(72) Erfinder: Ehrl, Janne, 80799 München (DE); Polanetzki, Holger, 85221 Dachau (DE); Dautl, Thomas, 85258 Weichs (DE)

(57) **Zusammenfassung**

Ein Nadler zur lokalen Oberflächenbearbeitung, insbesondere Verfestigung, von Bauteilen (6), mit einem Führungskörper (2) mit wenigstens einem Nadelkanal, der mit einem Fluidreservoir (10) kommuniziert und in dem eine Nadel (1) verschieblich geführt ist, weist ein bewegliches Stellmittel (3) auf, das das Fluidreservoir begrenzt.

## Beschreibung

Die Erfindung betrifft einen Nadler zur lokalen Oberflächenbearbeitung, insbesondere Verfestigung, von Bauteilen, insbesondere von Turbomaschinen, sowie ein damit durchgeführtes Verfahren.

Insbesondere zur Verfestigung und Spannungsbeinflussung von Bauteiloberflächen bei Turbomaschinen wie etwa Schaufeln von Pumpen, Verdichtern und Turbinen, ist es bekannt, diese kugelzustrahlen, indem Kugeln mittels Gebläse gegen die Bauteiloberfläche bescheunigt werden und diese beim Auftreffen verformen. Nachteilig erfordert dies ― insbesondere die Bevorratung, Beschleunigung und Rückgewinnung der ungebundenen Kugeln - einen hohen apparativen Aufwand, der insbesondere einem mobilen Einsatz, etwa einer in situ Oberflächenbearbeitung, entgegensteht. Zudem müssen nicht zu bearbeitende Oberflächenbereiche aufwändig maskiert werden.

Daher ist aus der CH 665 989 A5 ein Nadler nach dem Oberbegriff des Anspruchs 1 bekannt, bei dem an Stelle der ungebundenen Kugeln Nadeln, die verschieblich in einem Handgerät geführt sind, gegen die Bauteiloberfläche bescheunigt werden. Um Oberflächenunebenheiten auszugleichen, sind die Nadeln verschieblich in einem Antriebsteil gelagert und an ihrer Rückseite hydraulisch abgestützt. Das gesamte Antriebsteil mit den darin abgestützten Nadeln oszilliert hydraulisch, so dass die einzelnen, durch das Antriebsteil hydraulisch mitgenommenen Nadeln periodisch gegen die Bauteiloberfläche schlagen.

Diese Lösung ist dynamisch nicht optimal, da unter anderem stets das gesamte Antriebsteil mitbeschleunigt werden und dabei noch gegen eine Rückstellfeder arbeiten muss.

Aufgabe der vorliegenden Erfindung ist es, die Oberflächenbearbeitung von Bauteilen zu verbessern.

Zur Lösung dieser Aufgabe ist ein Nadler mit den Merkmalen des Oberbegriffs des Anspruchs 1 durch dessen kennzeichnende Merkmale weitergebildet. Anspruch 11 stellt ein Verfahren zur lokalen Oberflächenbearbeitung von Bauteilen mit einem erfindungsgemäßen Nadler unter Schutz. Vorteilhafte Weiterbildungen sind Gegenstand der Unteransprüche.

Ein erfindungsgemäßer Nadler weist einen ein- oder mehrteiligen Führungskörper, vorzugsweise aus einem schwereren Material wie insbesondere Metall, auf. In dem Führungskörper sind ein oder vorzugsweise mehrere Nadelkanäle ausgebildet. In einer bevorzugten Ausführung sind diese Nadelkanäle in einer vorgegebenen Matrix, insbesondere stochastisch, konzentrisch, strahlenförmig, gitterartig oder sprialförmig, angeordnet.

Der bzw. die Nadelkanäle kommunizieren mit einem Fluidreservoir, welches in einer bevorzugten Ausführung eine Flüssigkeit, insbesondere eine Hydraulikflüssigkeit wie etwa ein Hydrauliköl, enthält. Zusätzlich oder alternativ kann es auch ein Gas enthalten.

Vorzugsweise weist ein Nadelkanal einen gleichbleibenden Querschnitt auf und mündet in dem Fluidreservoir. Durch entsprechende Gestaltung kann jedoch die Fluidkommunikation zwischen Fluidreservoir und Nadelkanal beeinflusst werden. So kann in einer bevorzugten Ausführung eine Blende oder eine Einlaufdüse, insbesondere eine Fase, an der Mündung eines Nadelkanals zum Fluidreservoir vorgesehen sein.

In dem bzw. den Nadelkanälen ist jeweils eine Nadel axial verschieblich und fluiddicht geführt. Dabei können zur Variation der Nadelmatrix Nadelkanäle auch blind, d.h. ohne Nadel, fluiddicht geschlossen werden. Eine fluiddichte, axial verschiebliche Führung kann insbesondere eine oder mehrere elastische Dichtungselemente, insbesondere O-Ringe, Abstreif-, insbesondere Bürstendichtungen und/oder Labyrinthdichtungen aufweisen, wobei Dichtungselemente wie etwa O-Ringe gleichermaßen im jeweiligen Nadelkanal oder auf der jeweiligen Nadel gelagert sein können. In einer bevorzugten Ausführung ragt eine Nadel bei auf das Bauteil aufgesetztem Nadler, wenigstens im Wesentlichen, nicht in das Fluidreservoir. Hierzu kann die Länge eines Nadelkanals gleich oder größer der Länge der darin geführten Nadel sein.

Zur Imitierung des Kugelstrahlprozesses reicht häufig eine Mikrobewegung der Nadeln, die somit während der Bearbeitung auf dem Bauteil verbleiben können und bei impulsartiger Beaufschlagung unter plastischer Mikrodeformation der Bauteiloberfläche in diese eindringen. Verschiebt man anschließend den Nadler auf der Bauteiloberfläche, gleiten die verschieblich geführten Nadeln aus den Mikrovertiefungen und stehen zur neuerlichen Beaufschlagung bereit. Wenn somit in einer bevorzugten Ausführung keine Rückstellmittel zur Rückstellung der Nadeln entgegen ihrer Beschleunigungs- bzw. Bearbeitungsrichtung vorgesehen sind, muss vorteilhafterweise beim Beschleunigen nicht gegen ein solches Rückstellmittel angearbeitet werden. Alternativ kann in einer anderen Ausführung auch ein Rückstellmittel, etwa eine Tellerfeder, vorgesehen sein, die eine Nadel entgegen der Beschleunigungs- bzw. Bearbeitungsrichtung im Nadelkanal zurückstellt und so den freien Beschleunigungsweg der Nadel vor dem Auftreffen auf die Bauteiloberfläche vergrößert.

Erfindungsgemäß begrenzt nun ein bewegliches Stellmittel das Fluidreservoir. Dabei kann es sich insbesondere um einen Kolben handeln, der verschieblich an dem Führungskörper geführt ist und mit seiner Stirnseite das Fluidreservoir fluiddicht abschließt. Gleichermaßen kann es sich um eine flexible Membran handeln, die das Fluidreservoir fluiddicht abschließt.

Wird ein Impuls auf das bewegliche Stellmittel aufgeprägt, überträgt dieses den Impuls auf das Fluid im Fluidreservoir. Dieses überträgt den Impuls seinerseits homogen als Druckstoß auf die Nadel(n) in dem kommunizierenden Nadelkanal bzw. den kommunizierenden Nadelkanälen und beschleunigt diese so gegen die zu bearbeitenden Bauteiloberfläche. Ist das Fluid eine - näherungsweise inkompressible - Flüssigkeit, geschieht dies nahezu verlustfrei. Zudem können Rückwirkungen der Nadeln auf das Stellmittel fluidisch entkoppelt bzw. gedämpft werden. Durch die Vorgabe des hydraulischen Querschnitts der einzelnen Nadelkanäle kann zudem die Kraftverteilung auf die einzelnen Nadeln vorgegeben werden. So können in einer bevorzugten Ausführung durch, insbesondere leicht, voneinander abweichende Kanalquerschnitte die auf die einzelnen Nadeln und die durch diese auf das Bauteil aufgeprägten Kräfte variiert werden, um einen stochastischen Kugelstrahlprozess besser zu imitieren.

Vorzugsweise ist ein Aktuator zur Beaufschlagung des Stellmittels vorgesehen, der vorzugsweise mechanisch, hydraulisch, pneumatisch, elektromagnetisch und/oder durch Ultraschall beschleunigbar ist. Der Aktuator kann das Stellmittel direkt beschleunigen, indem dieses beispielsweise als Kolben ausgebildet ist, der zum Beispiel als Anker eines Elektromagneten oder als Kolben eines Hydraulik- oder Pneumatikzylinder ausgebildet ist. In einer bevorzugten Ausführung weist der Akuator jedoch einen Hammer auf, welcher, insbesondere mechanisch, hydraulisch, pneumatisch, elektromagnetisch und/oder durch Ultraschall, beschleunigbar ist und das Stellmittel beaufschlagt. Der Hammer kann wiederum etwa als Anker eines Elektromagneten oder als Kolben eines Hydraulik- oder Pneumatikzylinder ausgebildet sein. Ein das Stellmittel kontaktierender, jedoch gegenüber diesem beweglicher bzw. von diesem lösbarer Hammer kann vorteilhafterweise zunächst frei beschleunigt werden und überträgt dann bei Kontakt mit dem Stellmittel seinen dabei aufgebauten Impuls näherungsweise stoßartig auf das Stellmittel, das diesen Impuls, wie vorstehend beschrieben, seinerseits durch das Fluidreservoir auf die Nadeln überträgt. Grundsätzlich ist natürlich auch eine manuelle Beschleunigung des Stellmittels, etwa durch Beaufschlagung eines Kolbens mit einem handgeführten Hammer, möglich.

In einer Ausführung wird der Führungskörper direkt auf der zu bearbeitenden Bauteiloberfläche aufgesetzt und zwischen den einzelnen Nadelbeauschlagungen, insbesondere manuell oder durch einen Manipulator, verschoben, um den Auftreffpunkt der Nadeln zu variieren und so einen lokalen Kugelstrahlprozess zu imitieren. In einer bevorzugten Weiterbildung ist der Führungskörper motorisch, insbesondere elektromotorisch, oder manuell drehbar an einem Gehäuse geführt, das auf der zu bearbeitenden Bauteiloberfläche aufgesetzt wird. So kann in kinematisch vorteilhafter Weise das Auftreffbild variiert werden.

Vorzugsweise ist eine bauteilschonende Kontaktfläche zum Aufsetzen auf ein zu bearbeitendes Bauteil vorgesehen. Hierzu ist wenigstens der auf das Bauteil aufzusetzende Teil des Nadlers vorzugsweise aus Kunststoff, Gummi oder dergleichen ausgebildet. Insbesondere kann ein Aufsetzring aus Kunststoff vorgesehen sein, der, vorzugsweise auswechselbar, an dem Führungskörper oder einem Gehäuse befestigt ist. Dies gestattet es vorteilhaft, den Führungskörper bzw. das Gehäuse selber aus einem anderen Material, insbesondere Metall, herzustellen, welches aufgrund seines spezifischen Gewichts und seiner Festigkeit dynamisch und hinsichtlich der Lagerung der Nadeln vorteilhaft ist. Gleichermaßen ist es jedoch auch möglich, den Führungskörper bzw. das Gehäuse selber aus Kunststoff, Gummi oder dergleichen herzustellen.

Mit besonderem Vorteil wird ein erfindungsgemäßer Nadler zur lokalen, d.h. auf vorgegebene Flächenbereiche beschränkten, Oberflächenbearbeitung, insbesondere Verfestigung, von Bauteilen von Turbomaschinen verwendet. Es ist insbesondere für die Oberflächenbearbeitung von Schaufeln und/oder Strömungskanälen von Pumpen, Verdichtern und Turbinen, vorzugsweise von Flugtriebwerken, geeignet.

Weitere Merkmale und Vorteile ergeben sich aus den Unteransprüchen und dem Ausführungsbeispiel. Hierzu zeigt, teilweise schematisiert, die einzige:

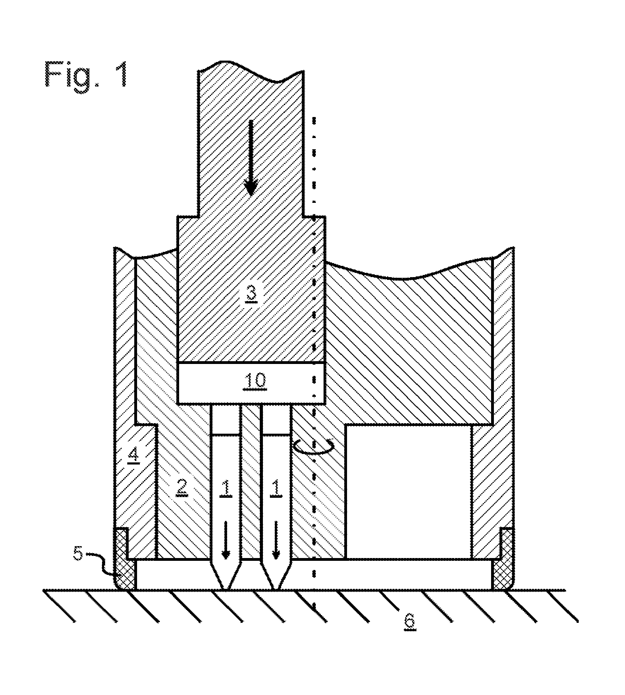

- Fig. 1: einen Nadler gemäß einer Ausführung der vorliegenden Erfindung im Querschnitt.
Fig. 1 zeigt einen Nadler gemäß einer Ausführung der vorliegenden Erfindung im Querschnitt, der auf die Oberfläche eines Bauteils 6 aufgesetzt ist.

Der Nadler weist einen Führungskörper 2 aus Metall auf, in dem ein Hydraulikfluidreservoir 10 ausgebildet ist. Mit diesem kommunizieren Nadelkanäle, von denen in Fig. 1 zur besseren Übersicht nur zwei dargestellt sind. In diesen sind Nadeln 1 axial (vertikal in Fig. 1) verschieblich geführt, so dass ihre abgerundeten Spitzen auf der Bauteiloberfläche aufstehen. Auf der den Kanalöffnungen gegenüberliegenden Seite wird das Fluidreservoir 10 durch einen Kolben 3 begrenzt, der ebenfalls verschieblich im Führungskörper 2 geführt ist. Aufgrund der nachfolgend näher erläuterten fluidischen Kraftübertragung müssen die Bewegungsrichtungen von Kolben 3 und Nadeln 1 nicht parallel sein.

Nadeln 1 und Kolben 3 sind jeweils fluiddicht verschieblich im Führungskörper 2 gelagert, indem beispielsweise in einem von dem Führungskörper 2 und Nadel 1 bzw. Kolben 3 wenigstens eine Ringnut ausgebildet ist, in der ein O-Ring als Dichtkörper angeordnet ist, der elastisch gegen die Gleitfläche des anderen von dem Führungskörper 2 und Nadel 1 bzw. Kolben 3 vorgespannt ist und so Führungskörper 2 und Nadel 1 bzw. Kolben 3 gegeneinander abdichtet (nicht dargestellt).

Der Führungskörper 2 ist drehbar in einem Gehäuse 4 gelagert, wie durch die strichpunktierte Drehachse und den Rotationsbewegungspfeil angedeutet. Dabei ist der Führungskörper 2 exzentrisch im Gehäuse 4 gelagert, so dass eine Drehung die Auftreffpunkte der Nadeln 1 auf der Bauteiloberfläche versetzt. Auf der dem Bauteil 6 zugewandten Stirnseite des Gehäuses 4 weist dieses einen auswechselbaren Kontaktring 5 aus weichem, das Bauteil 6 schonenden Kunststoffmaterial auf.

Zur getakteten Drehung des Führungskörpers 2 im Gehäuse 4 ist ein Elektromotor mit entsprechender Steuerung vorgesehen, der zur besseren Übersicht nicht dargestellt ist. Aus dem gleichen Grunde ebenfalls nicht dargestellt ist ein beispielsweise pneumatisch, elektromagnetisch oder durch Ultraschall beschleunigbarer Hammer, der in Fig. 1 von oben auf die dem Fluidreservoir 10 gegenüberliegende Stirnseite des Kolbens 3 auftrifft und dabei einen Impuls auf den Kolben 3 überträgt, der in Fig. 1 durch einen Doppelspitzenpfeil angedeutet ist. Beispielsweise ist der Hammer als Kolben eines Pneumatikzylinders oder als Anker eines Linearelektromagneten ausgebildet und wird durch Zufuhr von Druckluft bzw. Wicklungsstrom in Fig. 1 vertikal nach unten auf den Kolben 3 zu beschleunigt. Nach Wegnahme der Druckluft bzw. des Wicklungsstromes kann eine Rückstellfeder den Hammer wieder vom Kolben 3 abheben. Vorzugsweise ist die Taktung, mit der der Hammer beschleunigt wird, mit der Taktung der Drehbewegung des Führungskörper 2 im Gehäuse 4 derart synchronisiert, dass der Hammer stets bei ruhendem Führungskörpers 2 auf den Kolben 3 trifft.

Trifft der Hammer auf den Kolben 3, so wird diesem der in Fig. 1 durch den Doppelspitzenpfeil angedeutete Impuls aufgeprägt. Dieser überträgt den Impuls auf das Hydraulikfluid im Fluidreservoir 10, in dem sich ein Druckstoß ausbreitet, der homogen die Nadelkanäle beaufschlagt und dort entsprechend des jeweiligen wirksamen hydraulischen Querschnitts als Kraftstoß auf die Nadeln 1 übertragen wird. Deren wiederum durch Doppelspitzenpfeile angedeutete Impulse übertragen diese unter geringfügiger plastischer Deformation auf die Oberfläche des Bauteils 6, was dort zu Spannungsausgleich und Verfestigung führt.

Anschließend wird, wie durch den Rotationsbewegungspfeil angedeutet, bei relativ zum Bauteil 6 ruhenden Gehäuse 4 der Führungskörper 2 in diesem um einen vorgegebenen Winkel verdreht, wobei die Nadelspitzen aus den mikroskopischen Vertiefungen heraus- und auf der Oberfläche gleiten, bevor in der neuen Winkellage erneut der Hammer einen Impuls auf den Kolben 3 aufprägt. Durch mehrfache Widerholung kann so ein Kugelstrahlprozess imitiert werden, wobei durch das auf dem Bauteil 6 ruhende Gehäuse 4 der bearbeitete Bereich lokal begrenzt werden kann.

### Bezugszeichenliste

- 1: Nadel
- 2: Führungskörper
- 3: Kolben (Stellglied)
- 4: Gehäuse
- 5: Kontaktring
- 6: Bauteil
- 10: Fluidreservoir

## Patentansprüche

1. Nadler zur lokalen Oberflächenbearbeitung, insbesondere Verfestigung, von Bauteilen (6), mit einem Führungskörper (2) mit wenigstens einem Nadelkanal, der mit einem Fluidreservoir (10) kommuniziert und in dem eine Nadel (1) verschieblich geführt ist, **gekennzeichnet durch** ein bewegliches Stellmittel (3), das das Fluidreservoir begrenzt.

2. Nadler nach Anspruch 1, **dadurch gekennzeichnet, dass** das Stellmittel einen Kolben (3) aufweist, der verschieblich an dem Führungskörper geführt ist.

3. Nadler nach Anspruch 1, **dadurch gekennzeichnet, dass** das Stellmittel eine flexible Membran aufweist.

4. Nadler nach einem der vorhergehenden Ansprüche, **dadurch gekennzeichnet, dass** der Führungskörper, insbesondere motorisch, drehbar an einem Gehäuse (4) geführt ist.

5. Nadler nach einem der vorhergehenden Ansprüche, **gekennzeichnet durch** einen, insbesondere mechanisch, hydraulisch, pneumatisch und/oder elektromagnetisch beschleunigbaren Aktuator zur Beaufschlagung des Stellmittels.

6. Nadler nach Anspruch 5, **dadurch gekennzeichnet, dass** der Akuator einen Hammer aufweist, welcher, insbesondere mechanisch, hydraulisch, pneumatisch, elektromagnetisch und/oder durch Ultraschall, beschleunigbar ist und das Stellmittel beaufschlagt.

7. Nadler nach einem der vorhergehenden Ansprüche 5 bis 6, **dadurch gekennzeichnet, dass** der Aktuator zur impulsartigen Beschleunigung ausgebildet ist.

8. Nadler nach einem der vorhergehenden Ansprüche, **gekennzeichnet durch** eine bauteilschonende Kontaktfläche (5) zum Aufsetzen auf das zu bearbeitende Bauteil.

9. Nadler nach einem der vorhergehenden Ansprüche, **dadurch gekennzeichnet, dass** das Fluidreservoir eine Flüssigkeit, insbesondere Hydraulikflüssigkeit, enthält.

10. Nadler nach einem der vorhergehenden Ansprüche, **dadurch gekennzeichnet, dass** eine Nadel bei auf das Bauteil aufgesetztem Nadler, wenigstens im Wesentlichen, nicht in das Fluidreservoir ragt.

11. Verfahren zur lokalen Oberflächenbearbeitung, insbesondere Verfestigung, von Bauteilen (6), insbesondere von Turbomaschinen, mit einem Nadler nach einem der vorhergehenden Ansprüche, **dadurch gekennzeichnet, dass** bei auf das Bauteil aufgesetztem Nadler ein Impuls auf das Stellmittel (3) aufgeprägt wird.
